(19) Europäisches Patentamt
European Patent Office
Office européen des brevets

(11) Veröffentlichungsnummer: **0 015 512**
**A1**

# (12) EUROPÄISCHE PATENTANMELDUNG

(21) Anmeldenummer: **80101004.2**

(22) Anmeldetag: **29.02.80**

(51) Int. Cl.³: **C 09 B 29/36**, D 06 P 3/54

(30) Priorität: **03.03.79 DE 2908357**

(43) Veröffentlichungstag der Anmeldung: **17.09.80 Patentblatt 80/19**

(84) Benannte Vertragsstaaten: **AT BE CH DE FR GB IT LU NL SE**

(71) Anmelder: **BASF Aktiengesellschaft, Carl-Bosch-Strasse 38, D-6700 Ludwigshafen (DE)**

(72) Erfinder: **Ellingsfeld, Heinz, Dr., Pierstrasse 9A, D-6710 Frankenthal (DE)**
Erfinder: **Hansen, Guenter, Dr., Mundenheimer Strasse 168, D-6700 Ludwigshafen (DE)**
Erfinder: **Seybold, Guenther, Dr., Otto-Dill-Strasse 32, D-6700 Ludwigshafen (DE)**

(54) **Thiazol-Dispersionsfarbstoffe.**

(57) Thiazol-Dispersionsfarbstoffe der allgemeinen Formel I

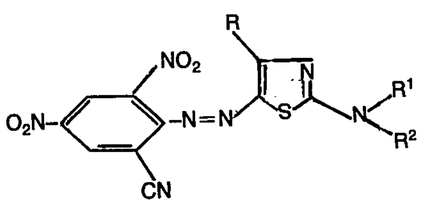

I,

in der

R gegebenenfalls substituiertes Phenyl oder Naphthyl,

$R^1$ und $R^2$ $C_2$- bis $C_8$-Alkyl, β-Cyanäthyl, β-Chloräthyl, β-$C_1$- bis $C_4$-Alkoxycarbonyläthyl, β-$C_1$- bis $C_6$-Alkoxyäthyl, β-Phenoxyäthyl, Allyl, Methallyl, Propargyl, β-$C_1$- bis $C_4$-Alkylaminocarbonyloxyäthyl, gegebenenfalls durch Chlor substituiertes Phenylaminocarbonyloxyäthyl, $CH_2CH_2(OCH_2CH_2)_nOB$ oder $(CH_2)_3(OC_2H_4)_nOB$,

n die Zahlen 1 oder 2 und

B Wasserstoff, $C_1$- bis $C_4$-Alkyl, Cyclohexyl, Benzyl, Phenyläthyl, Phenyl oder Tolyl bedeuten.

Die neuen Farbstoffe eignen sich insbesondere zum Färben synthetischer Polyester.

EP 0 015 512 A1

## Thiazol-Dispersionsfarbstoffe

Die Erfindung betrifft Farbstoffe der allgemeinen Formel I

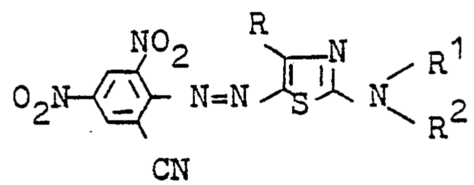

I

in der

R gegebenenfalls substituiertes Phenyl oder Naphthyl,

$R^1$ und $R^2$ $C_2$- bis $C_8$-Alkyl, ß-Cyanäthyl, ß-Chloräthyl, ß-$C_1$- bis $C_4$-Alkoxycarbonyläthyl, ß-$C_1$- bis $C_6$-Alkoxyäthyl, ß-Phenoxyäthyl, Allyl, Methallyl, Propargyl, ß-$C_1$- bis $C_4$-Alkylaminocarbonyloxyäthyl, gegebenenfalls durch Chlor substituiertes Phenylaminocarbonyloxyäthyl, $CH_2CH_2(OCH_2CH_2)_nOB$ oder $(CH_2)_3(OC_2H_4)_nOB$

n die Zahlen 1 oder 2 und

B Wasserstoff, $C_1$- bis $C_4$-Alkyl, Cyclohexyl, Benzyl, Phenyläthyl, Phenyl oder Tolyl bedeuten.

Die Phenyl- und Naphthylreste R können gegebenenfalls durch Chlor, Brom, Methyl, Äthyl, Propyl, Butyl, Pentyl, Hexyl, Octyl, Isooctyl, Methoxy, Äthoxy, Propoxy, Butoxy, Amyloxy, Hexoxy, Phenoxy, ß-Cyanäthoxy, ß-$C_1$- bis $C_4$-Alkoxycarbonyläthoxy, ß-$C_1$- bis $C_4$-Alkylmercapto, ß-$C_1$- bis $C_4$-Alkoxyäthoxy, Allyloxy, Propargyloxy, Nitro, Cyan, $C_1$- bis $C_4$-Acylamino, Benzoylamino, Alkylsulfonyl, Phenylsulfonyl, $C_1$- bis $C_4$-Alkoxycarbonyl, N-$C_1$- bis $C_4$-Alkylcarbamoyl oder Phenyl ein-oder mehrfach substituiert sein.

Einzelne Reste $R^1$ und $R^2$ sind neben den bereits genannten z. B.:

Bg/BL

Äthyl, Propyl, Isopropyl, Butyl, Pentyl, Isopentyl, Oktyl, Methoxyäthyl, Äthoxyäthyl, Butoxyäthyl, Methylaminocarbonyloxyäthyl, Äthylaminocarbonyloxyäthyl oder Butylaminocarbonyloxyäthyl.

Einzelne Reste R sind neben den bereits genannten z. B.:

p-Chlorphenyl, p-Bromphenyl, 3,4-Dichlorphenyl, 2,4-Dichlorphenyl, p-Tolyl, 3-Chlor-4-methylphenyl, 2-Chlor-4-methylphenyl, m- und o-Tolyl, 3,5-Dichlorphenyl, 4-Äthylphenyl, 4-Butylphenyl, 4-Methoxyphenyl, 4-Methoxy-3-chlorphenyl, 4-Methoxy-3-nitrophenyl, 4-Methoxy-3,5-dichlorphenyl, 4-Methoxy-3,5-dibromphenyl, 4-Alkyloxy-3-chlorphenyl, 4-Äthoxycarbonyläthoxy-3-chlorphenyl, 4-Alkyloxy-3-chlorphenyl, 4-Methylsulfonylphenyl, 4-Methoxycarbonylphenyl, 2-Äthoxycarbonylphenyl, 2-Butoxycarbonylphenyl, 2-Äthoxycarbonyl-4-nitrophenyl, 3-Nitrophenyl, 4-Cyanphenyl, 4-N-Äthyl-carbamoylphenyl oder 2-Äthoxycarbonyl-3,4,5,6-tetrachlorphenyl, 4-Butylmercaptophenyl, 4-ß-Cyanäthoxyphenyl und 4-Methoxycarbonylphenyl.

Zur Herstellung der Verbindungen der Formel I kann man eine Diazoverbindung des Amins der Formel

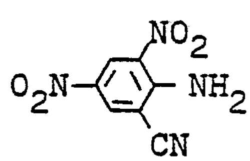

mit einer Kupplungskomponente der Formel II

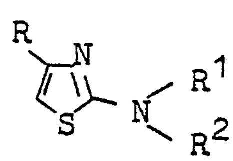

II

umsetzen.

Einzelheiten der Herstellung können den Beispielen entnommen werden, in denen sich Angaben über Teile und Prozente, sofern nicht anders vermerkt, auf das Gewicht beziehen.

Verbindungen der Formel II sind z. B. gemäß dem in der französischen Patentschrift 1 600 940 beschriebenen Verfahren zugänglich.

Die Verbindungen der Formel I eignen sich insbesondere zum Färben von synthetischen Fasern, vorzugsweise Polyestern. Man erhält je nach Substituenten violette bis grüne Färbungen mit guten Echtheiten.

Einige Verbindungen der Formel I sind auch für das in der deutschen Patentschrift 1 811 796 beschriebene Verfahren geeignet.

Von besonderer Bedeutung sind Verbindungen der Formel Ia

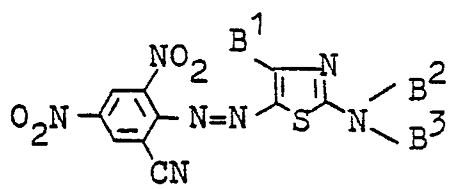

Ia

in der

$B^1$ gegebenenfalls durch Chlor, Brom, $C_1$- bis $C_4$-Alkoxy, Allyloxy, Phenoxy, $C_1$- bis $C_4$-Alkyl, $C_1$- bis $C_4$-Alkanoylamino, $C_1$- bis $C_4$-Alkoxycarbonylamino, Phenyl, $C_1$- bis $C_4$-Alkylmerkapto, $C_1$- bis $C_4$-Alkylsulfonyl oder $C_1$- bis $C_4$-Alkoxycarbonyl substituiertes Phenyl und

$B^2$ und $B^3$ Äthyl, Propyl, Butyl, Allyl, ß-Cyanäthyl, ß-$C_1$- bis $C_4$-Alkoxycarbonyläthyl, ß-$C_1$- bis $C_4$-Alkoxy-oder ß-$C_1$- bis $C_4$-Alkylaminocarbonyloxyäthyl bedeuten.

Beispiel 1

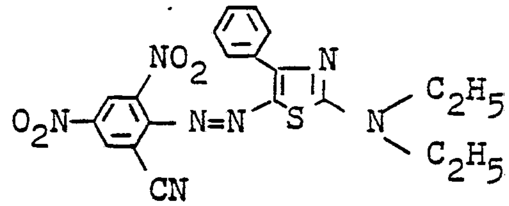

10,5 Teile 2,4-Dinitro-6-cyananilin werden bei 10 bis 15 °C in 70 Teile einer 85 %igen Schwefelsäure eingetragen und bei 0 - 5 °C durch Zugabe von 18 Teilen einer 40 %igen Nitrosylschwefelsäure diazotiert. Nach ca. 3-stündigem Rühren bei 0 - 5 °C ist die Diazotierung beendet. Man vereinigt die Diazolösung mit einer Lösung aus 13,5 Teilen 2-(N,N-Diäthylamino)-4-phenyl-thiazol und 50 Teilen Dimethylformamid, die zuvor in ein Gemisch aus 100 Teilen Wasser, 400 Teilen Eis und 5 Teilen eines Kondensationsproduktes aus 23 Mol Äthylenoxid und einem teilweise ungesättigten Fettalkoholgemisch eingegossen war. Man läßt die Mischung über Nacht rühren, saugt den gebildeten Farbstoff ab, wäscht ihn mit Wasser neutral und trocknet ihn bei 50 °C unter vermindertem Druck. Man erhält ein dunkles Pulver, das Polyestergewebe in echten blauen Tönen färbt.

Analog Beispiel 1 erhält man auch die in der folgenden Tabelle durch Angabe der Substituenten gekennzeichneten Farbstoffe, die auf Polyesterfasern Färbungen im angegebenen Farbton ergeben.

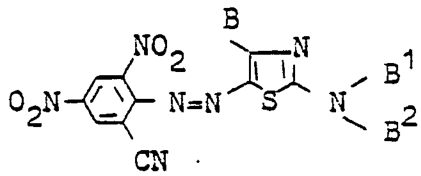

| Bsp. | B | $B^1$ | $B^2$ | Farbton |
|---|---|---|---|---|
| 2 | 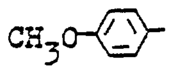 | $C_2H_5$ | $C_2H_5$ | grün |
| 3 | 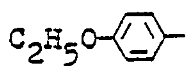 | $C_2H_5$ | $C_2H_5$ | grün |
| 4 | 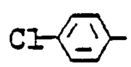 | $C_2H_5$ | $C_2H_5$ | blau |
| 5 | 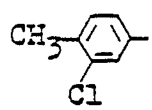 | $C_2H_5$ | $C_2H_5$ | blau |
| 6 | 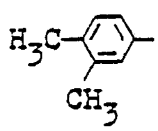 | $C_2H_5$ | $C_2H_5$ | blau |
| 7 | 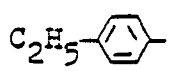 | $C_2H_5$ | $C_2H_5$ | blau |
| 8 | 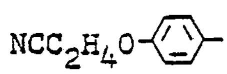 | $C_2H_5$ | $C_2H_5$ | grün |
| 9 | 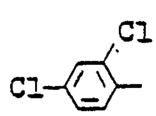 | $C_2H_5$ | $C_2H_5$ | violett |
| 10 | 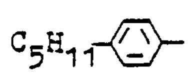 | $C_2H_5$ | $C_2H_5$ | blau |
| 11 | 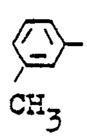 | $C_2H_5$ | $C_2H_5$ | blau |

| Bsp. | B | $B^1$ | $B^2$ | Farbton |
|---|---|---|---|---|
| 12 | 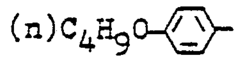 | $C_2H_5$ | $C_2H_5$ | grün |
| 13 | 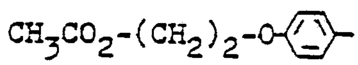 | $C_2H_5$ | $C_2H_5$ | grün |
| 14 | 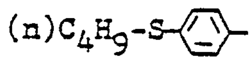 | $C_2H_5$ | $C_2H_5$ | grün |
| 15 | 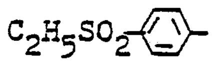 | $C_2H_5$ | $C_2H_5$ | blau |
| 16 | 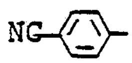 | $C_2H_5$ | $C_2H_5$ | blau |
| 17 | 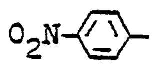 | $C_2H_5$ | $C_2H_5$ | blau |
| 18 | 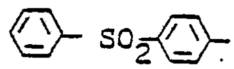 | $C_2H_5$ | $C_2H_5$ | blau |
| 19 | 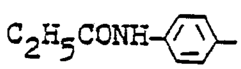 | $C_2H_5$ | $C_2H_5$ | grün |
| 20 | 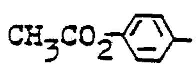 | $C_2H_5$ | $C_2H_5$ | blau |
| 21 | 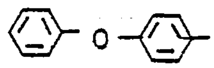 | $C_2H_5$ | $C_2H_5$ | grün |
| 22 | 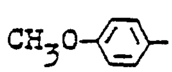 | $-CH_2-CH=CH_2$ | $-CH_2-CH=CH_2$ | grün |
| 23 | 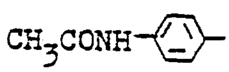 | $-CH_2-CH=CH_2$ | $-CH_2-CH=CH_2$ | grün |
| 24 | 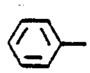 | $-CH_2-CH=CH_2$ | $-CH_2-CH=CH_2$ | blau |
| 25 | 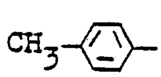 | $-CH_2-CH=CH_2$ | $-CH_2-CH=CH_2$ | blau |
| 26 | 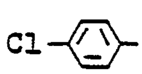 | $-CH_2-CH=CH_2$ | $-CH_2-CH=CH_2$ | blau |
| 27 | 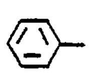 | $-C_8H_{17}$ | $-C_2H_5$ | blau |

| Bsp. | B | $B^1$ | $B^2$ | Farbton |
|---|---|---|---|---|
| 28 | 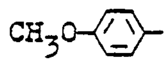 | $-C_8H_{17}$ | $-C_2H_5$ | grün |
| 29 | 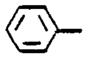 | $-C_2H_4OCH_3$ | $-C_2H_5$ | blau |
| 30 | 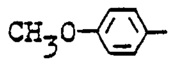 | $-C_2H_4OCH_3$ | $-C_2H_5$ | grün |
| 31 | 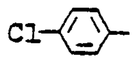 | $-C_2H_4OC_4H_9(n)$ | $-C_2H_5$ | blau |
| 32 | 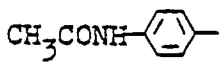 | $-C_2H_4OC_4H_9(n)$ | $-C_2H_5$ | grün |
| 33 | 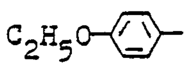 | $-C_2H_4O-$ 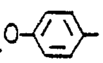 | $-C_2H_5$ | grün |
| 34 | 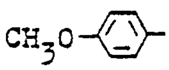 | $-C_2H_4CN$ | $-C_2H_5$ | türkis |
| 35 | 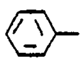 | $-C_2H_4CN$ | $-C_2H_5$ | blau |
| 36 | 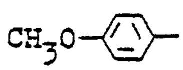 | $-CH_2-CH=CH_2$ | $-C_2H_5$ | grün |
| 37 | 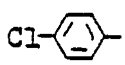 | $-C_2H_4OH$ | $-C_2H_5$ | blau |
| 38 | 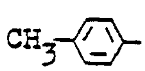 | $-C_2H_4OH$ | $-C_2H_5$ | blau |
| 39 | 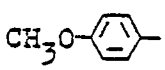 | $-C_2H_4O\underset{\underset{O}{\|}}{C}NH$ 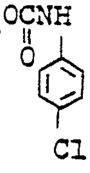 | $-C_2H_5$ | grün |
| 40 | 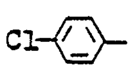 | $-C_2H_4OCOCH_3$ | $-C_2H_5$ | blau |
| 41 | 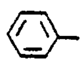 | $-CH_2-\underset{2}{C}HO(CH_2)_2OH$ | $-C_2H_5$ | blau |
| 42 | 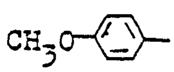 | $-C_2H_4O\underset{\underset{O}{\|}}{C}NHC_4H_9(n)$ | $-C_2H_5$ | grün |

| Bsp. | B | $B^1$ | $B^2$ | Farbton |
|---|---|---|---|---|
| 43 | 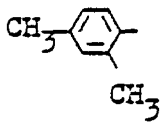 | $-(CH_2)_3-(OC_2H_4)_2-OCH_3$ | $-C_2H_5$ | blau |
| 44 | 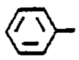 | $-C_2H_4Cl$ | $-C_2H_5$ | blau |
| 45 | 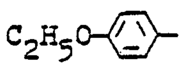 | $-C_8H_{17}(n)$ | $-C_2H_5$ | grün |
| 46 | 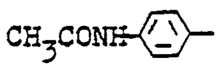 | $-CH_2-C{\equiv}CH$ | $-C_2H_5$ | grün |
| 47 | 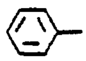 | $-C_2H_4OCH_3$ | $-C_2H_4OCH_3$ | blau |
| 48 | 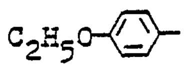 | $-C_2H_4OCH_3$ | $-C_2H_4OCH_3$ | grün |
| 49 | 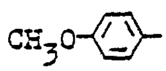 | $-C_2H_4OCH_3$ | $-C_2H_4CN$ | türkis |
| 50 | 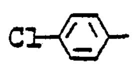 | $-C_2H_4OCH_3$ | $-C_2H_4OCOCH_3$ | blau |
| 51 | 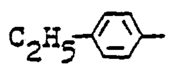 | $-C_2H_4OC_4H_9(n)$ | $-C_2H_4OCONH-C_4H_9(n)$ | blau |
| 52 | 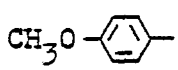 | $-C_2H_4OC_3H_7(i)$ | $-C_2H_4Cl$ | grün |
| 53 | 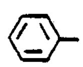 | $-C_2H_4OC_2H_5$ | $-CH_2-CH=CH_2$ | blau |
| 54 | 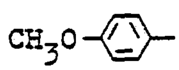 | $-CH_2-CH_2-O$ | $-C_2H_5$ | grün |
| 55 | 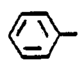 | $-C_2H_4CN$ | $-C_2H_4CN$ | blau |
| 56 | 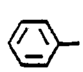 | $-C_2H_4CN$ | $-C_2H_4CO_2C_3H_7(n)$ | blau |
| 57 | 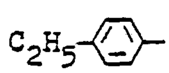 | $-C_2H_4CN$ | $-C_2H_4OH$ | blau |

| Bsp. | B | $B^1$ | $B^2$ | Farbton |
|---|---|---|---|---|
| 58 | 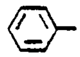 | $-C_2H_4CN$ | $-C_2H_4Cl$ | blau |
| 59 | 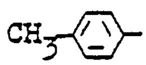 | $-C_2H_4CN$ | $-C_2H_4OCONHCH_3$ | blau |
| 60 | 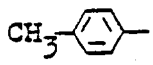 | $-C_2H_4CN$ | $-CH_2-CH=CH_2$ | blau |
| 61 | 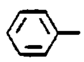 | $-C_2H_4CO_2CH_3$ | $-C_2H_4CO_2CH_3$ | blau |
| 62 | 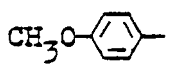 | $-C_2H_4CO_2C_4H_9(n)$ | $-C_2H_4CO_2C_4H_9(n)$ | blau |
| 63 | 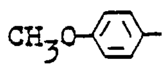 | $-C_2H_4CO_2CH_3$ | $-C_2H_4OH$ | grün |
| 64C | 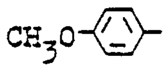 | $-C_2H_4CO_2CH_3$ | $-C_2H_4OCOCH_3$ | grün |
| 65 | 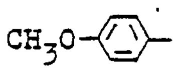 | $-C_2H_4CO_2CH_3$ | $-CH_2-CH_2-Cl$ | grün |
| 66 | 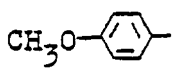 | $-C_2H_4CO_2CH_3$ | $-C_2H_4OCONH$<br>$(n)H_9C_4$ | grün |
| 67 | 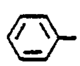 | $-C_2H_4CO_2CH_3$ | $-CH_2-CH=CH_2$ | blau |
| 68 | 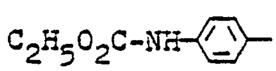 | $-C_2H_4CO_2CH_3$ | $-CH_2-CH=CH_2$ | grün |

Patentansprüche

1. Thiazol-Dispersionsfarbstoffe der allgemeinen Formel I

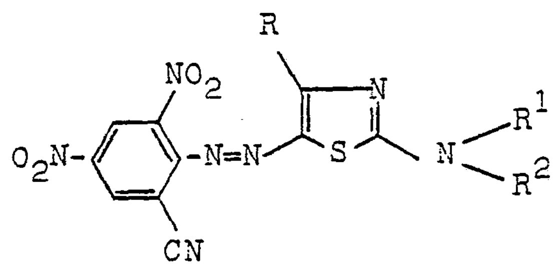

I,

in der

R gegebenenfalls substituiertes Phenyl oder Naphthyl,

$R^1$ und $R^2$ $C_2$- bis $C_8$-Alkyl, ß-Cyanäthyl, ß-Chloräthyl, ß-$C_1$- bis $C_4$-Alkoxycarbonyläthyl, ß-$C_1$- bis $C_6$-Alkoxyäthyl, ß-Phenoxyäthyl, Allyl, Methallyl, Propargyl, ß-$C_1$- bis $C_4$-Alkylaminocarbonyloxyäthyl, gegebenenfalls durch Chlor substituiertes Phenylaminocarbonyloxyäthyl, $CH_2CH_2(OCH_2CH_2)_nOB$ oder $(CH_2)_3(OC_2H_4)_nOB$,

n die Zahlen 1 oder 2 und

B Wasserstoff, $C_1$- bis $C_4$-Alkyl, Cyclohexyl, Benzyl, Phenyläthyl, Phenyl oder Tolyl bedeuten.

2. Farbstoffe gemäß Anspruch 1 der Formel I a

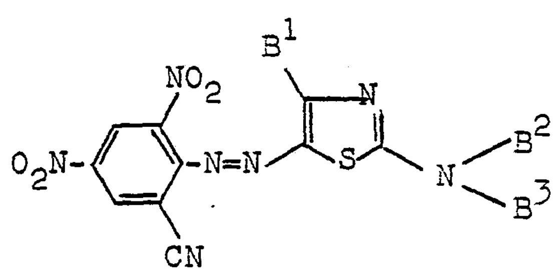

I a,

in der

$B^1$ gegebenenfalls durch Chlor, Brom, $C_1$- bis $C_4$-Alkoxy, Allyloxy, Phenoxy, $C_1$- bis $C_4$-Alkyl, $C_1$- bis $C_4$-Alkanoylamino, $C_1$- bis $C_4$-Alkoxycarbonylamino, Phenyl, $C_1$- bis $C_4$-Alkylmercapto, $C_1$- bis $C_4$-Alkylsulfonyl oder $C_1$- bis $C_4$-Alkoxycarbonyl substitu-

iertes Phenyl und

$B^2$ und $B^3$ Äthyl, Propyl, Butyl, Allyl, ß-Cyanäthyl, ß-$C_1$- bis $C_4$-Alkoxycarbonyläthyl, ß-$C_1$- bis $C_4$-Alkoxy- oder ß-$C_1$- bis $C_4$-Alkylaminocarbonyloxyäthyl bedeuten.

3. Farbstoffe gemäß Anspruch 2, wobei $B^1$ durch Methoxy, Äthoxy, ß-Cyanäthoxy, Chlor, $C_1$- bis $C_4$-Alkanoylamino oder $C_1$- bis $C_4$-Alkyl substituiertes Phenyl ist.

4. Verfahren zur Herstellung von Farbstoffen gemäß Anspruch 1, dadurch gekennzeichnet, daß man eine Diazoverbindung des Amins der Formel

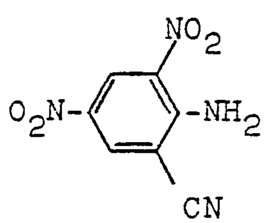

mit einer Kupplungskomponente der Formel II

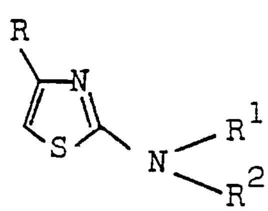

II

umsetzt.

0015512

Europäisches Patentamt

# EUROPÄISCHER RECHERCHENBERICHT

Nummer der Anmeldung
EP 80 10 1004

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl. 3) |
| --- | --- | --- | --- |
| X | US - A - 3 816 391 (COATES WEAVER)<br>* Spalte 1, Zeilen 19-58; Tabelle, Beispiel 8; Spalten 3,4; Tabelle, Beispiel 28 * | 1-4 | C 09 B 29/36<br>D 06 P 3/54 |
| A | FR - A - 1 511 934 (BAYER)<br>* Seite 1, linke Spalte ganz; rechte Spalte, Zeilen 1-5; Seite 18, Tabelle, Beispiele 4,5 * | 1,4 | |
| P | FR - A - 2 405 978 (BASF)<br>* Seiten 1-3 ganz * | 1,4 | RECHERCHIERTE SACHGEBIETE (Int. Cl. 3)<br>C 09 B 29/00<br>29/01<br>29/36 |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
| --- | --- | --- |
| Den Haag | 06-06-1980 | GREEN |